# EUROPÄISCHE PATENTSCHRIFT

(11) **EP 3 581 668 B1**
(45) Veröffentlichungstag und Bekanntmachung des Hinweises auf die Patenterteilung: **26.07.2023**
(21) Anmeldenummer: 19179020.3
(22) Anmeldetag: 07.06.2019
(51) Int. Cl.: C22C 14/00, C22C 1/04, C22F 1/18, B33Y 70/00, B29C 64/153

(54) **VERFAHREN ZUR HERSTELLUNG EINES BAUTEILS AUS GAMMA - TIAL UND ENTSPRECHEND HERGESTELLTES BAUTEIL**
METHOD FOR PRODUCING A COMPONENT FROM GAMMA TIAL AND CORRESPONDINGLY MANUFACTURED COMPONENT
PROCÉDÉ DE FABRICATION D'UN COMPOSANT À PARTIR DE GAMMA-TIAL ET COMPOSANT FABRIQUÉ CORRESPONDANT

(30) Priorität: 12.06.2018 DE 102018209315
(43) Veröffentlichungstag der Anmeldung: 18.12.2019
(73) Patentinhaber: MTU Aero Engines AG, 80995 München (DE)
(72) Erfinder: Schloffer, Martin, 81247 München (DE)

(56) Entgegenhaltungen:
- EP-A1- 3 372 700
- WO-A1-2019/040509
- DE-B3-102015 103 422
- Chen Xueyang ET AL: "design and Fabrication of Functionally Graded Materials From Ti to Alpha Ti-Al By Laser Metal Deposition", , 9 August 2017 (2017-08-09), pages 148-159, XP055947168, Retrieved from the Internet: URL:https://scholarsmine.mst.edu/cgi/viewc ontent.cgi?article=3741&context=matsci_eng _facwork [retrieved on 2022-07-28]

## Beschreibung

### HINTERGRUND DER ERFINDUNG

### GEBIET DER ERFINDUNG

Die vorliegende Erfindung betrifft ein Verfahren zur Herstellung eines Bauteils aus einer TiAl - Legierung und insbesondere einer y - TiAl - Legierung gemäß Anspruch 1, sowie eine Schaufel oder ein Schaufelsegment eines Flugtriebwerks oder einer stationären Gasturbine gemäß Anspruch 12

### STAND DER TECHNIK

Titanaluminide und entsprechende Legierungen, die als größte Legierungsbestandteile Titan und Aluminium aufweisen, sind aufgrund ihrer Festigkeit durch die Ausbildung von intermetallischen Phasen, wie y - TiAl und α₂ - Ti₃Al, sowie wegen des geringen spezifischen Gewichts interessant für vielfältige Anwendungen, bei denen hohe Festigkeit und niedriges Gewicht eine Rolle spielen, wie beispielsweise für bewegte Komponenten in Strömungsmaschinen, wie Flugtriebwerken oder stationären Gasturbinen. Titanaluminidlegierungen werden dabei insbesondere als y - TiAl - Legierungen eingesetzt, die zu einem großen Teil aus y - TiAl - Phase bestehen. Die γ - TiAl - Legierungen können hierbei Gefüge aufweisen, die von einem reinen y - TiAl - Gefüge mit vorzugsweise gleichachsigen y - TiAl - Körnern über Duplexgefüge mit y - TiAl - Körnern und lamellaren Körnern bis zu vollständig lamellaren Gefügen mit lamellar Körnern aus abwechselnden y - TiAl - und α₂ - Ti₃Al - Platten reichen. Moderne TiAl - Legierungen weisen als Legierungsbestandteile unter anderem Niob und Molybdän auf und werden deshalb auch als TNM - TiAl bezeichnet.

Nachteilig ist allerdings, dass entsprechende Bauteile aus TiAl - Legierungen eine geringe Kerbschlagzähigkeit aufweisen, da die Bauteile häufig bei höheren Temperaturen, also oberhalb der halben Schmelztemperatur, eingesetzt werden sollen und deshalb eine ausreichende Kriechstabilität aufweisen müssen. Mikrostrukturen, die diese Eigenschaft aufweisen, besitzen jedoch üblicherweise eine geringe Duktilität.

Darüber hinaus sind groß dimensionierte Bauteile aus TNM - TiAl mit einer Erstreckung von mehr als 50 cm in ihrer größten Dimension auch schwer herzustellen, da diese Teile schmelzmetallurgisch schwer seigerungsfrei hergestellt werden können, was zu unzulässigen Schwankungen in der lokalen Mikrostruktur und den lokalen mechanischen Eigenschaften führen kann. Insbesondere können auch sogenannte Makroseigerung im Dimensionsbereich von größer 200 µm nicht durch Schmieden des entsprechenden Bauteils beseitigt werden, da eine Rekristallisation des Gefüges nach dem Schmieden lediglich zu einer Beseitigung von Mikroseigerung im Dimensionsbereich kleiner 200 µm führt.

Aus dem Stand der Technik wie z.B. DE 10 2015 103422 B3 ist es auch bereits bekannt, Bauteile aus TiAl - Legierungen durch additive Fertigungsverfahren aus Pulver schichtweise aufzubauen. Beispielsweise kann entsprechendes Pulvermaterial durch Elektrostrahlschmelzen oder selektives Laserstrahlschmelzen aufgeschmolzen und zu entsprechenden Bauteilen verbunden werden. Allerdings besteht hierbei die Problematik, dass derartig hergestellte Bauteile häufig unerwünschte Texturen, die zu einer Anisotropie der mechanischen Eigenschaften führen, und Mikroseigerungen mit Dimensionen im Bereich der Schichtdicken von ungefähr 100 µm aufweisen können.

### OFFENBARUNG DER ERFINDUNG

### AUFGABE DER ERFINDUNG

Es ist deshalb Aufgabe der vorliegenden Erfindung ein Verfahren zur Herstellung eines Bauteils aus einer TiAl - Legierung sowie ein entsprechendes Bauteil bereitzustellen, bei welchen die Nachteile des Standes der Technik vermieden werden. Insbesondere sollen seigerungsfreie und texturfreie Bauteile in einfacher und effizienter Weise hergestellt werden, die insbesondere auch die verschiedenen Anforderungen hinsichtlich Duktilität, Festigkeit, Kriechfestigkeit und Kerbschlagzähigkeit erfüllen.

### TECHNISCHE LÖSUNG

Diese Aufgabe wird gelöst durch ein Verfahren mit den Merkmalen des Anspruchs 1 sowie eine Schaufel oder Schaufelsegment mit den Merkmalen des Anspruchs 12. Vorteilhafte Ausgestaltungen sind Gegenstand der abhängigen Ansprüche.

Die vorliegende Erfindung schlägt ein Verfahren zur Herstellung eines Bauteils aus einer TiAl - Legierung und insbesondere einer y - TiAl - Legierung vor, bei welchem zunächst ein Schmiederohling aus der entsprechenden TiAl - Legierung durch ein additives Verfahren aus Pulvermaterial aufgebaut wird. Anschließend wird dieser additiv hergestellte Schmiederohling in einem zweiten Schritt zu einem Halbzeug umgeformt, wobei der Umformungsgrad über den gesamten Schmiederohling so hoch gewählt ist, dass in einem dritten Schritt bei einer Wärmebehandlung das Gefüge rekristallisiert wird. Durch die additive Fertigung können Seigerungen und insbesondere Makroseigerungen, die durch ein anschließendes Schmieden nicht mehr beseitigt werden können, vermieden werden. Durch den zweiten Schritt des Umformens können Mikroseigerung oder Texturen, die durch die additive Fertigung des Schmiederohlings eingebracht worden sind, in einfacher Weise wieder beseitigt werden. Darüber hinaus ermöglicht die additive Herstellung des Schmiederohlings die Einstellung von verschiedenen Gefügen bzw. Mikrostrukturen in verschiedenen Bereichen eines einstückig geformten Bauteils, da bei der additiven Fertigung durch unterschiedliche starkes Verdampfen von Aluminium beim Erschmelzen des Pulvers in verschiedenen Bereichen des Schmiederohlings unterschiedliche chemische Zusammensetzungen des Bauteilwerkstoffs eingestellt werden können.

Die Erfindung kann allgemein bei Bauteilen aus Titanaluminiden und Titanaluminiumlegierungen eingesetzt werden, die im Rahmen der vorliegenden Erfindung als TiAl - Legierungen bezeichnet werden. Unter diese Legierungen fallen sämtliche Legierungen, deren größte Bestandteile Titan und Aluminium sind und entsprechend intermetallische Phasen mit diesen beiden Komponenten, nämlich Titan und Aluminium, bilden können. Insbesondere können die TiAl - Legierungen weitere Legierungsbestandteile, wie Niobe und / oder Molybdän und / oder Wolfram aufweisen.

Der dritte Schritt der Rekristallisation kann bei dem erfindungsgemäßen Verfahren gleichzeitig mit dem zweiten Schritt in Form einer dynamischen Rekristallisation während einer Warmumformung erfolgen und / oder der dritte Schritt der Rekristallisation kann zeitlich nach dem zweiten Schritt der Umformung erfolgen, indem eine separate Wärmebehandlung durchgeführt wird. Die Wärmebehandlung zur Durchführung einer Rekristallisation des Gefüges kann auch mit einer Verdichtung des Halbzeugs durch heißisostatisches Pressen (HIP) kombiniert werden. Durch das heißisostatische Pressen können Poren, die bei der Herstellung des Schmiederohlings durch additive Fertigung in das Halbzeug eingebracht worden sind, beseitigt werden.

Die additive Herstellung des Schmiederohlings kann durch verschiedene Verfahren erfolgen, wobei sich insbesondere das Elektronenstrahlschmelzen (Elektron Beam Melting EBM) anbietet. Aber auch Verfahren wie das selektive Laserstrahlschmelzen (Slective Laser Melting SLM) können eingesetzt werden.

Die Umformung vom Schmiederohling zum Halbzeug kann einstufig erfolgen, sodass aufwändige mehrstufige Schmiedeprozesse vermieden werden können. Die Umformung wird mit mindestens einem so hohen Umformungsgrad durchgeführt, dass eine vollständige Rekristallisation des umgeformten Halbzeugs ermöglicht wird. Entsprechend kann der Schmiederohling bereits mit einer komplexen Geometrie bzw. endkonturnah ausgebildet werden, wobei in einem Umformvorgang an allen Positionen im Schmiederohling die für die Rekristallisation notwendige Energie einbringen zu können.

Die Einstellung unterschiedlicher chemischer Zusammensetzungen und daraus resultierend unterschiedlicher Mikrostrukturen in verschiedenen Bereichen des Schmiederohling wird hinsichtlich der Einstellung eines unterschiedlichen Aluminiumgehalts durch eine unterschiedlich starke Behandlung des Pulvers mit einem energiereichen Strahl, wie beispielsweise einem Elektronenstrahl, bei der additiven Fertigung erreicht. So kann die Temperatur der Schmelze und / oder die Dauer des Schmelzzustands variiert werden, sodass Aluminium in unterschiedlichem Maße verdampfen kann. Auf diese Weise kann der Aluminiumgehalt bei der additiven Fertigung in einfacher Weise variiert werden und es ist möglich unterschiedliche Bereiche mit unterschiedlicher chemischer Zusammensetzung sowie gradierte Bereiche mit einem Gradienten in der chemischen Zusammensetzung über das Bauteil einzustellen. Auf diese Weise ist es möglich ein Bauteil zu realisieren, welches in den verschiedenen Bereichen, in denen unterschiedliche Anforderungen hinsichtlich Duktilität, Festigkeit, Kriechbeständigkeit, Schlagzähigkeit usw. vorliegen, entsprechend unterschiedliche, angepasste Gefüge aufweist.

Das Halbzeug kann nach dem dritten Schritt der Rekristallisation von der Rekristallisationstemperatur in geeigneter Weise abgekühlt werden, insbesondere schnell abgekühlt bzw. abgeschreckt werden. Durch die Abschreckgeschwindigkeit kann in den lamellaren Bereichen des Gefüges, die sich einstellende Lamellenbreite beeinflusst werden.

Das Halbzeug, das nach dem Umformen des Schmiederohlings und der Rekristallisationswärmebehandlung vorliegt, kann bereits im Wesentlichen der Endform des Bauteils entsprechen. Lediglich geringfügige Nacharbeiten im Oberflächenbereich können erforderlich sein. Diese können mechanisch, chemisch und / oder elektrochemisch durchgeführt werden.

Ein entsprechendes Bauteil ist textur - und seigerungsfrei und kann mit Dimensionen hergestellt werden, bei denen die größte Dimension größer 0,5 m betragen kann.

Das Bauteil weist Bereiche mit unterschiedlicher chemischer Zusammensetzung auf und kann insbesondere Bereiche mit sich kontinuierlich variierender chemischer Zusammensetzung aufweisen und besitzt entsprechend unterschiedliche Gefüge, insbesondere gradierte Gefüge.

Das Bauteil ist eine Schaufel oder ein Schaufelsegment mit mehreren Schaufeln für eine Strömungsmaschine, wie ein Flugtriebwerk oder eine stationäre Gasturbine, wobei eine derartige Schaufel an ihrem Schaufelfuß und / oder an Schaufelkanten mit einer höheren Duktilität und entsprechend einem höheren Anteil an y - TiAl - Körnern ausgebildet ist als in anderen Bereichen und entsprechend in diesen Bereichen auch eine höhere Aluminiumkonzentration aufweist.

### KURZBESCHREIBUNG DER FIGUREN

Die beigefügten Zeichnungen zeigen in rein schematischer Weise in
- Figur 1: ein y - TiAl - Gefüge,
- Figur 2: ein Duplexgefüge aus y - TiAl - Körnern und lamellaren Körnern mit abwechselnden Platten aus y - TiAl und α₂ - Ti₃Al,
- Figur 3: ein voll lamellares Gefüge und in
- Figur 4: eine perspektivische Darstellung eines Laufschaufelsegments mit zwei Laufschaufeln.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele ersichtlich. Allerdings ist die Erfindung nicht auf diese Ausführungsbeispiele beschränkt.

Die vorliegende Erfindung betrifft ein Verfahren zur Herstellung von Bauteilen von Strömungsmaschinen, wie stationären Gasturbinen oder Flugtriebwerken, eingesetzt werden. Beispielsweise ist es möglich Schaufeln und insbesondere Laufschaufeln sowie Schaufelsegmente mit mehreren Schaufeln durch das erfindungsgemäße Verfahren herzustellen. Hierzu wird zunächst ein Schmiederohling durch ein additives Verfahren, wie beispielsweise selektives Laserstrahlschmelzen oder Elektronenstrahlschmelzen aus Pulvermaterial aufgebaut. Als Pulver wird y - TiAl - Pulver verwendet, welches beispielsweise durch eine Legierung mit einer chemischen Zusammensetzung mit 43,5 at.% Aluminium, 4 at.% Niob und 1 at.% Mo sowie Rest Titan gebildet ist.

Durch das additive Verfahren wird der Schmiederohling mit einer Form hergestellt, die bereits nahe der Endform des herzustellenden Bauteils, als beispielsweise der Schaufel oder des Schaufelsegments ist. Allerdings wird die Form so gewählt, dass bei einem nachfolgenden Umformschritt der Umformgrad über den gesamten Schmiederohling so hoch ist, dass eine Rekristallisation des Gefüges erfolgen kann.

Entsprechend wird der Schmiederohling nach seiner additiven Herstellung mittels Gesenkschmieden in einem einzigen Umformschritt in eine Form gebracht, die ein Halbzeug des herzustellenden Bauteils darstellt, welches bereits weitgehend die Endkontur des Bauteils aufweist und lediglich eine Oberflächenbearbeitung oder eine geringe Formanpassung zur endgültigen Formgebung des Bauteils erfordert.

Nach der Herstellung des Halbzeugs durch die Umformung wird das so hergestellte Halbzeug einer Wärmebehandlung unterzogen, sodass eine Rekristallisation des Gefüges erfolgt. Durch die Rekristallisation können Mikroseigerungen, die sich beispielsweise durch die schichtweise Ausbildung des Schmiederohlings bei der additiven Fertigung ergeben können, vollständig beseitigt und das Gefüge homogenisiert werden. Die Wärmebehandlung kann im Rahmen eines hei-βisostatischen Pressvorgangs (HIP) erfolgen, mit welchem gleichzeitig eine Verdichtung des Bauteils erzielt werden kann, sodass eventuell bei der additiven Fertigung entstandene Poren beseitigt werden können. Allerdings ist es auch möglich, dass bereits bei der Umformung des Schmiederohteils zum Halbzeug eine dynamische Rekristallisation während der Warmumformung stattfindet.

Zur Einstellung des gewünschten Gefüges wird das Halbzeug nach der Umformung und / oder der Rekristallisationswärmebehandlung bzw. dem heißisostatischen Pressen in geeigneter Weise abgekühlt, sodass sich ein gewünschtes Gefüge einstellt. Insbesondere kann durch ein schnelles Abkühlen die Einstellung der Lamellenabstände in den lamellaren Gefügebereichen des Gefüges beeinflusst werden.

Durch das angewandte Herstellungsverfahren ist es in einfacher Weise möglich unterschiedliche Gefüge in unterschiedlichen Bereichen des herzustellenden Bauteils einzustellen, sodass das Bauteil in verschiedenen Bereichen unterschiedliche mechanische Eigenschaften aufweisen kann, obwohl es einstückig ausgebildet ist. Damit lassen sich insbesondere für Schaufeln oder Schaufelsegmente von Strömungsmaschinen die unterschiedlichen Anforderungen an das Bauteil doch unterschiedliche Gefügeeinstellungen in verschiedenen Bereichen erfüllen.

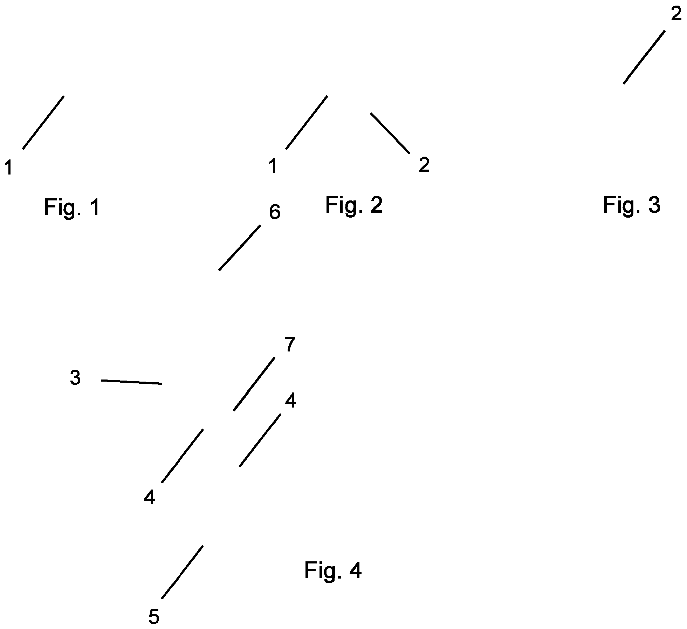

Beispielsweise können bei der Herstellung von Schaufeln oder Schaufelsegmenten Bereiche im Schaufelfuß und an den Schaufelkanten, die eine möglichst hohe Duktilität und gute Beständigkeit gegen Ermüdungsbeanspruchung aufweisen sollen, mit hohen Aluminiumgehalten ausgebildet werden, sodass sich weitgehend y - TiAl - Gefüge einstellen, wie dies beispielsweise in der Figur 1 gezeigt ist, in der ausschließlich y - TiAl - Körner 1 im gezeigten Gefüge vorliegen. Hingegen kann im Schaufelkörper, wo hohe Kriechfestigkeiten erforderlich sind, ein voll lamellar ausgebildetes Gefüge eingestellt werden, wie es in Figur 3 dargestellt ist. Die Figur 2 zeigt ein Duplexgefüge mit lamellaren Körnern 2 und y - TiAl - Körnern 1.

Die Einstellung der unterschiedlichen Gefüge erfolgt durch die Variation des Aluminiumgehalts Der Aluminiumgehalt wird bei der additiven Herstellung durch unterschiedlich starkes Verdampfen (Abbrand) von Aluminium eingestellt Wird die Schmelze des Pulvers bei der additiven Fertigung auf höhere Temperatur gebracht und / oder länger auf höherer Temperatur gehalten, so kann mehr Aluminium abdampfen und der Aluminiumgehalt kann über den Schmiederohling trotz Verwendung des gleichen Pulvers variiert werden. Entsprechend ist auch die Ausbildung einer gradierten Mikrostruktur durch die Einstellung eines Gradienten des Aluminiumgehalts über dem Bauteil möglich.

Die Figur 4 zeigt in einer perspektivischen Darstellung ein Beispiel eines Laufschaufelsegments 3 mit zwei Schaufeln 4, die an einem inneren Deckband mit einem gemeinsamen Fuß 5 angeordnet sind. Die dem Fuß 5 gegenüberliegenden Enden der Schaufeln 4 sind über ein äußeres Deckband 6 verbunden. Bei einem derartigen Bauteil können im Bereich des Fußes 5 und im Bereich des äußeren Deckband 6 sowie an den Schaufelkanten 7 aluminiumreiche Bereiche ausgebildet werden, sodass sich Gefüge mit einem hohen Anteil an y - TiAl - Körnern einstellen, während im Schaufelblattbereich einer voll lamellares Gefüge durch einen niedrigeren Aluminiumgehalt eingestellt werden kann. Kommt es beispielsweise im Bereich eines Schaufelblatts, welches aufgrund des voll lamellaren Gefüges eine hohe Kriechbeständigkeit aber geringe Duktilität aufweist, zu einem Bruch des Schaufelblatts durch einen Einschlag eines Fremdkörpers, so sind die Bruchteile der Schaufel 4 über das innere und äußere Deckband 6, die eine höhere Duktilität aufweisen, weiterhin mit dem Schaufelsegment 3 verbunden, sodass möglicherweise ein Totalversagen vermieden werden kann.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: γ - TiAl - Korn
- 2: Korn mit Lamellen aus abwechselnden y - TiAl - und α₂ - Ti₃Al - Platten
- 3: Laufschaufelsegment
- 4: Laufschaufeln
- 5: Schaufelsegmentfuß
- 6: Deckband
- 7: Schaufelkante

## Patentansprüche

1. Verfahren zur Herstellung eines Bauteils aus einer γ - TiAl - Legierung, bei welchem in einem ersten Schritt ein Schmiederohling aus einer γ - TiAl - Legierung durch ein additives Verfahren aus einem Pulvermaterial aufgebaut wird und anschließend in einem zweiten Schritt der Schmiederohling zu einem Halbzeug umgeformt wird, wobei der Umformgrad über den gesamten Schmiederohling so hoch ist, dass in einem dritten Schritt bei einer Wärmebehandlung das Gefüge rekristallisiert wird, **dadurch gekennzeichnet, dass** das Schmiederohteil bei der additiven Fertigung mit mindestens zwei Bereichen unterschiedlicher chemischer Zusammensetzung hergestellt wird, wobei eine unterschiedliche chemische Zusammensetzung im Schmiederohteil bei der additiiven Fertigung durch unterschiedlich starkes Verdampfen von Aluminium beim Erschmelzen des Pulvers eingestellt wird.

2. Verfahren nach Anspruch 1,
**dadurch gekennzeichnet, dass**
der dritte Schritt der Rekristallisation gleichzeitig mit dem zweiten Schritt in Form einer dynamischen Rekristallisation während einer Warmumformung erfolgt und / oder der dritte Schritt der Rekristallisation nach dem zweiten Schritt der Umformung erfolgt, insbesondere bei einer mit der Wärmebehandlung kombinierten Verdichtung durch hei-βisostatisches Pressen des Halbzeugs.

3. Verfahren nach einem der vorhergehenden Ansprüche,
**dadurch gekennzeichnet, dass**
die additive Herstellung durch Elektronenstrahlschmelzen erfolgt.

4. Verfahren nach einem der vorhergehenden Ansprüche,
**dadurch gekennzeichnet, dass**
die Umformung einstufig erfolgt.

5. Verfahren nach einem der vorhergehenden Ansprüche,
**dadurch gekennzeichnet, dass**
die Form des additiv gefertigten Schmiederohlings so gewählt wird, dass der Umformgrad im zweiten Schritt so niedrig wie möglich ist, sodass lediglich eine im Wesentlichen vollständige Rekristallisation des umgeformten Halbzeugs möglich ist.

6. Verfahren nach einem der vorhergehenden Ansprüche,
**dadurch gekennzeichnet, dass**
das Schmiederohteil bei der additiven Fertigung mit einer kontinuierlich sich über einen Bereich des Schmiederohteils sich ändernden chemischen Zusammensatzung.

7. Verfahren nach einem der vorhergehenden Ansprüche,
**dadurch gekennzeichnet, dass**
das Halbzeug nach dem dritten Schritt der Rekristallisation von der Rekristallisationstemperatur abgeschreckt wird.

8. Verfahren nach einem der vorhergehenden Ansprüche,
**dadurch gekennzeichnet, dass**
das Halbzeug mechanisch, chemisch und / oder elektrochemisch nachbearbeitet wird.

9. Verfahren nach einem der vorhergehenden Ansprüche,
**dadurch gekennzeichnet, dass**
als Bauteil eine Schaufel oder ein Segment (3) mit mehreren Schaufeln, insbesondere drei Schaufeln, einstückig hergestellt werden.

10. Verfahren nach Anspruch 9,
**dadurch gekennzeichnet, dass**
Bereiche im Schaufelfuß und / oder an Schaufelkanten mit einer höheren Al - Konzentration gebildet werden als die übrigen Schaufelbereiche.

11. Verfahren nach Anspruch 10,
**dadurch gekennzeichnet, dass**
im Bereich des Schaufelfußes (5) und / oder von Schaufelkanten (7) ein Gefüge mit einem höheren Anteil von y - TiAl - Körnern vorliegt als in den übrigen Schaufelbereichen, wobei insbesondere in Schaufelbereichen mit höheren Kriechbelastungen als in anderen Bereichen ein Gefüge mit einer voll lamellaren Struktur (2) vorliegt.

12. Schaufel oder Schaufelsegment (3) eines Flugtriebwerks oder einer Gasturbine, wobei die Schaufel oder das Schaufelsegment (3) aus einer γ - TiAl - Legierung hergestellt ist und keine Texturen und Seigerungen aufweist, wobei im Bereich des Schaufelfußes (5) und / oder von Schaufelkanten (7) ein Gefüge mit einem höheren Anteil von y - TiAl - Körnern vorliegt als in den übrigen Schaufelbereichen.

13. Schaufel oder Schaufelsegment (3) nach Anspruch 12,
**dadurch gekennzeichnet, dass**
die Schaufel oder das Schaufelsegment (3) eine Länge von mindestens 0,3 m aufweist.

14. Schaufel oder Schaufelsegment (3) nach Anspruch 12 oder 13,
**dadurch gekennzeichnet, dass**
die Schaufel oder das Schaufelsegment (3) vordefinierte Bereiche kontinuierlich variierender chemischer Zusammensetzung und / oder Bereiche mit voll lamellarem Gefüge aufweist.

## Claims

1. Method for producing a component from a γ-TiAl alloy, in which, in a first step, a forging blank made of a γ-TiAl alloy is built up from a powder material by an additive method and subsequently, in a second step, the forging blank is reshaped to form a semi-finished product, the degree of reshaping over the entire forging blank being so high that, in a third step, the structure is recrystallized during a heat treatment, **characterized in that,** in additive manufacturing process, the forging blank is produced so as to have at least two regions of different chemical composition, a different chemical composition in the forging blank being adjusted during the additive manufacturing process by evaporating aluminum at a different intensity during melting of the powder.

2. Method according to claim 1,
**characterized in that**
the third step of recrystallization takes place at the same time as the second step in the form of a dynamic recrystallization during a hot forming process, and/or the third step of recrystallization takes place after the second step of reshaping, in particular during a compression process combined with the heat treatment by hot isostatic pressing of the semi-finished product.

3. Method according to either of the preceding claims,
**characterized in that**
the additive production is carried out by electron beam melting.

4. Method according to any of the preceding claims,
**characterized in that**
the reshaping takes place in one stage.

5. Method according to any of the preceding claims,
**characterized in that**
the shape of the additively manufactured forging blank is selected such that the degree of reshaping in the second step is as low as possible, so that only a substantially complete recrystallization of the reshaped semi-finished product is possible.

6. Method according to any of the preceding claims,
**characterized in that,**
in the additive manufacturing process, the forging blank having a chemical composition which changes continuously over a region of the forging blank.

7. Method according to any of the preceding claims,
**characterized in that,**
the semi-finished product is quenched by the recrystallization temperature after the third step of recrystallization.

8. Method according to any of the preceding claims,
**characterized in that,**
the semi-finished product is mechanically, chemically and/or electrochemically reworked.

9. Method according to any of the preceding claims,
**characterized in that,**
a blade or a segment (3) having a plurality of blades, in particular three blades, is produced in one piece as a component.

10. Method according to claim 9,
**characterized in that**
regions are formed in the blade root and/or at blade edges so as to have a higher Al concentration than the remaining blade regions.

11. Method according to claim 10,
**characterized in that**
a structure which has a higher proportion of γ-TiAl grains than in the remaining blade regions is present in the region of the blade root (5) and/or of blade edges (7), a structure which has a fully lamellar structure (2) being present in particular in blade regions having higher creep stresses than in other regions.

12. Blade or blade segment (3) of an aircraft engine or a gas turbine, wherein the blade or blade segment (3) is made of a γ-TiAl alloy and has no textures and segregations, wherein a structure which has a higher proportion of γ-TiAl grains than in the remaining blade regions is present in the region of the blade root (5) and/or of blade edges (7).

13. Blade or blade segment (3) according to claim 12,
**characterized in that**
the blade or the blade segment (3) has a length of at least 0.3 m.

14. Blade or blade segment (3) according to either claim 12 or claim 13,
**characterized in that**
the blade or the blade segment (3) has predefined regions of continuously varying chemical composition and/or regions having a fully lamellar structure.

## Revendications

1. Procédé de fabrication d'un composant en un alliage de γ-TiAl, dans lequel, dans une première étape, une ébauche forgée en un alliage de γ-TiAl est construite par un procédé additif à partir d'un matériau en poudre et ensuite, dans une deuxième étape, l'ébauche forgée est transformée en un produit semi-fini, le degré de transformation sur la totalité de l'ébauche forgée étant d'un niveau élevé tel que, dans une troisième étape, la structure est recristallisée au cours d'un traitement thermique, **caractérisé en ce que,** lors de la fabrication additive, la pièce brute forgée comportant au moins deux zones de compositions chimiques différentes est fabriquée, une composition chimique différente étant réglée dans la pièce brute forgée lors de la fabrication additive par une évaporation d'intensité différente de l'aluminium lors de la fusion de la poudre.

2. Procédé selon la revendication 1,
**caractérisé en ce que**
la troisième étape de recristallisation a lieu simultanément avec la deuxième étape sous forme d'une recristallisation dynamique pendant une transformation à chaud et/ou la troisième étape de recristallisation a lieu après la deuxième étape de transformation, en particulier lors d'un compactage par compression isostatique à chaud du produit semi-fini combiné au traitement thermique.

3. Procédé selon l'une des revendications précédentes,
**caractérisé en ce que**
la fabrication additive s'effectue par fusion par bombardement électronique.

4. Procédé selon l'une des revendications précédentes,
**caractérisé en ce que**
la transformation s'effectue en une étape.

5. Procédé selon l'une des revendications précédentes,
**caractérisé en ce que**
la forme de l'ébauche forgée fabriquée de manière additive est choisie de telle façon que le degré de transformation à la deuxième étape est le plus bas possible, de telle sorte que seule une recristallisation sensiblement complète du produit semi-fini transformé est possible.

6. Procédé selon l'une des revendications précédentes,
**caractérisé en ce que,**
lors de la fabrication additive, la pièce brute forgée comportant une composition chimique qui change en continu sur une zone de la pièce brute forgée.

7. Procédé selon l'une des revendications précédentes,
**caractérisé en ce que**
après la troisième étape de recristallisation, le produit semi-fini est refroidi brusquement par la température de recristallisation.

8. Procédé selon l'une des revendications précédentes,
**caractérisé en ce que**
le produit semi-fini est post-traité par voie mécanique, chimique et/ou électrochimique.

9. Procédé selon l'une des revendications précédentes,
**caractérisé en ce que**
une pale ou un segment (3) comportant plusieurs pales, en particulier trois pales, est fabriqué d'une seule pièce en tant que composant.

10. Procédé selon la revendication 9,
**caractérisé en ce que**
des zones dans le pied de pale et/ou au niveau de bords de pale sont formées à une concentration en Al supérieure à celle dans les autres zones de pale.

11. Procédé selon la revendication 10,
**caractérisé en ce que**
une structure comportant une proportion de grains en γ-TiAl supérieure à celle dans les autres zones de pale est présente dans la zone du pied de pale (5) et/ou de bords de pale (7), en particulier une structure comportant une structure complètement lamellaire (2) étant présente dans des zones de pale soumises à des sollicitations de fluage supérieures à celles dans d'autres zones.

12. Pale ou segment de pale (3) d'un moteur d'aéronef ou d'une turbine à gaz, la pale ou le segment de pale (3) étant fabriqué à partir d'un alliage de γ-TiAl et ne présentant pas de textures ni de ségrégations, une structure comportant une proportion de grains en γ-TiAl supérieure à celle dans les autres zones de pale étant présente dans la zone du pied de pale (5) et/ou de bords de pale (7).

13. Pale ou segment de pale (3) selon la revendication 12,
**caractérisé en ce que**
la pale ou le segment de pale (3) présente une longueur d'au moins 0,3 m.

14. Pale ou segment de pale (3) selon la revendication 12 ou 13, **caractérisé en ce que**
la pale ou le segment de pale (3) présente des zones prédéfinies de composition chimique variant en continu et/ou des zones comportant une structure complètement lamellaire.
